# EUROPÄISCHE PATENTSCHRIFT

(11) **EP 4 517 468 B1**
(45) Veröffentlichungstag und Bekanntmachung des Hinweises auf die Patenterteilung: **29.04.2026**
(21) Anmeldenummer: 24193784.6
(22) Anmeldetag: 09.08.2024
(51) Int. Cl.: G05D 1/224

(54) **VERFAHREN ZUM BESTIMMEN EINER VISUELLEN KARTE FÜR EIN MOBILES GERÄT**
METHOD FOR DETERMINING A VISUAL MAP FOR A MOBILE DEVICE
PROCÉDÉ DE DÉTERMINATION D'UNE CARTE VISUELLE POUR UN APPAREIL MOBILE

(30) Priorität: 31.08.2023 DE 102023208375
(43) Veröffentlichungstag der Anmeldung: 05.03.2025
(73) Patentinhaber: Robert Bosch GmbH, 70442 Stuttgart (DE)
(72) Erfinder: Cornelis, Nico, 3001 Brabant (BE); Casagrande, Gianni, 3001 Brabant (BE); Waelbers, Topquark Steven, 3020 Herent (BE); Pinaya Gutierrez, Benjamin, 3001 Brabant (BE); Arias Rivera, Monica, 3001 Brabant (BE)

(56) Entgegenhaltungen:
- EP-B1- 2 087 459
- DE-T5- 112020 005 594
- US-A1- 2021 240 195

## Beschreibung

Die vorliegende Erfindung betrifft ein Verfahren zum Bestimmen einer visuellen Karte zumindest eines Teils einer Umgebung, in der sich ein mobiles Gerät, insbesondere ein sich zumindest teilweise automatisiert bewegendes Fahrzeug oder Roboter, insbesondere ein Rasenmähroboter, bewegt, eine Recheneinheit und ein Computerprogramm zu dessen Durchführung sowie ein mobiles Gerät.

### Hintergrund der Erfindung

Mobile Geräte oder Arbeitsgeräte wie z.B. sich zumindest teilautomatisiert bewegende Fahrzeuge oder Roboter bewegen sich typischerweise in einer Umgebung, insbesondere einer zu bearbeitenden Umgebung oder einem Arbeitsbereich, wie z.B. einer Wohnung, in einem Garten, in einer Fabrikhalle oder auf der Straße, in der Luft oder im Wasser.

Die EP 2 087 459 A1, die US 2021/240195 A1, sowie die DE 11 2020 005594 T5 beschäftigen sich mit der Erfassung von Bildern, auch mit Transformation in Draufsicht.

### Offenbarung der Erfindung

Erfindungsgemäß werden ein Verfahren zum Bestimmen einer visuellen Karte, eine Recheneinheit und ein Computerprogramm zu dessen Durchführung sowie ein mobiles Gerät mit den Merkmalen der unabhängigen Patentansprüche vorgeschlagen. Vorteilhafte Ausgestaltungen sind Gegenstand der Unteransprüche sowie der nachfolgenden Beschreibung.

Die Erfindung beschäftigt sich allgemein mit mobilen Geräten, die sich in einer Umgebung oder dort z.B. in einem Arbeitsbereich bewegen oder zumindest bewegen können. Es kann dann auch von mobilen Arbeitsgeräten gesprochen werden. Beispiele für solche mobile Geräte (oder auch mobile Arbeitsgeräte) sind z.B. Roboter und/oder Drohnen und/oder auch sich teilautomatisiert oder (vollständig) automatisiert (zu Land, Wasser oder in der Luft) bewegende Fahrzeuge. Als Roboter kommen z.B. Haushaltsroboter wie Reinigungsroboter (z.B. in Form von Saug- und/oder Wischroboter), Boden- oder Straßenreinigungsgeräte, Bauroboter oder Rasenmähroboter in Betracht, ebenso aber auch andere sog. Service-Roboter, als sich zumindest teilweise automatisiert bewegende Fahrzeuge z.B. Personenbeförderungsfahrzeuge oder Güterbeförderungsfahrzeuge (auch sog. Flurförderfahrzeuge, z.B. in Lagerhäusern), aber auch Luftfahrzeuge wie sog. Drohnen oder Wasserfahrzeuge. Die Erfindung betrifft konkret einen Rasenmähroboter als mobiles Gerät.

Ein solches mobiles Gerät weist insbesondere eine Steuer- oder Regeleinheit und eine Antriebseinheit zum Bewegen des mobilen Geräts auf, sodass das mobile Gerät in der Umgebung, insbesondere entlang eines Bewegungspfads, bewegt werden kann. Hierzu können basierend auf dem Bewegungspfad Navigationsinformationen bestimmt werden, also z.B. bestimmte Anweisungen, in welche Richtung das mobile Gerät fahren soll, um dem Bewegungspfad zu folgen. Diese können dann über die Steuer- oder Regeleinheit sowie die Antriebseinheit umgesetzt werden.

Für die Navigation kann z.B. eine Umgebungskarte verwendet werden, die insbesondere mittels SLAM erhalten bzw. bestimmt worden sein kann. Als SLAM ("Simultaneous Localization and Mapping", in etwa: Simultane Positionsbestimmung und Kartierung) wird ein Verfahren in der Robotik bezeichnet, bei dem ein mobiles Gerät wie ein Roboter gleichzeitig eine Karte seiner Umgebung erstellen und seine räumliche Lage innerhalb dieser Karte schätzen kann oder muss. Es dient damit dem Erkennen von Hindernissen und unterstützt somit die autonome Navigation.

Außerdem weist ein solches mobiles Gerät bzw. Arbeitsgerät einen oder mehrere Sensoren auf mittels welcher die Umgebung bzw. Informationen in der Umgebung erfasst werden können. Dies können z.B. Kameras, Lidar-Sensoren oder auch Intertialsensoren sein mit deren Hilfe die Umgebung und/oder die Bewegung des mobilen Gerätes z.B. zwei- oder dreidimensional erfasst werden.

Weiterhin kann ein solches mobiles Gerät eingerichtet sein, mittels einer Kommunikationsverbindung Daten zu empfangen und/oder Daten zu versenden, allgemein also zu kommunizieren bzw. Daten auszutauschen. Auf diese Weise ist eine Kommunikation mit dem mobilen Gerät möglich, dem mobilen Gerät z.B. Anweisungen zu erteilten, andere Daten an das mobile Gerät zu übermitteln oder Daten bzw. Informationen vom mobilen Gerät zu empfangen. Dabei kommen insbesondere drahtlosen Kommunikationsverbindungen in Betracht. Hierzu kann das mobile Gerät z.B. entsprechende (ggf. verschiedene) Module zur drahtlosen Kommunikation aufweisen, die z.B. aber auch in eine Recheneinheit integriert sein können.

Bei einem solchen mobilen Gerät ist es auch üblich, dass es Funktionen gibt, die das mobile Gerät durchführen kann, d.h. das mobile Gerät ist eingerichtet, eine oder mehrere, vorzugsweise verschiedene Funktionen durchzuführen. Anstelle von Funktionen kann auch von Anwendungen gesprochen werden. Solche Funktionen können z.B. eine Arbeitsfunktion oder eine Einlernfunktion sein.

Die Arbeitsfunktion umfasst z.B. ein automatisiertes Bewegen des mobilen Geräts in einer Umgebung und ein Durchführen eines Arbeitsvorgangs in der Umgebung, zumindest zeitweise während des Bewegens in der Umgebung. Im Falle des Rasenmähroboters kann die Arbeitsfunktion also z.B. das Mähen (während eines Bewegens) umfassen. Hierzu kann dem mobilen Gerät z.B. ein Startbefehl zum Durchführen der Arbeitsfunktion erteilt werden, z.B. durch Senden entsprechender Daten über die drahtlose Kommunikationsverbindung.

Die Einlernfunktion umfasst z.B. ein manuell gesteuertes Bewegen des mobilen Geräts in der Umgebung, insbesondere ohne Durchführen eines Arbeitsvorgangs in der Umgebung. Im Falle des Rasenmähroboters kann die Einlernfunktion also z.B. das (manuelle) Bewegen oder Steuern entlang einer Umrandung des Arbeitsbereichs umfassen, um dem Rasenmähroboter die Umrandung beizubringen. Hierzu können dem mobilen Gerät z.B. (kontinuierlich) Steuerbefehle zum Navigieren bzw. Bewegen in der Umgebung erteilt werden, z.B. durch Senden entsprechender Daten über die drahtlose Kommunikationsverbindung. Hierbei wird auch von einem Einlernen oder einem sog. "Teach-In" gesprochen.

Ein Aspekt dieses Einlernens ist, dass eine Umrandung (oder Begrenzung) gefunden oder vorgegeben werden soll, die den Arbeitsbereich, also z.B. einen Garten, umgibt. Bei der Arbeitsfunktion kann diese Umrandung dann verwendet werden, um die automatisierte Bewegung des mobilen Geräts zu begrenzen.

Es wird für ein mobiles Gerät eine Möglichkeit vorgeschlagen, eine solche Umrandung, die einen Arbeitsbereich für das mobile Gerät zumindest teilweise begrenzt, zu bestimmen.

Hierzu werden, in einem ersten Schritt, Umgebungsinformationen der Umgebung, in der sich das mobile Gerät bewegt oder bewegen soll bereitgestellt. Bei diesen Umgebungsinformationen kann es sich z.B. um Positionen, Orientierungen und dergleichen handeln, die z.B. für SLAM verwendet werden können. Insbesondere können die Umgebungsinformationen aber auch Bilder bzw. Umgebungsbilder umfassen, die z.B. von der Kamera des mobilen Geräts erfasst werden bzw. worden sind. Dabei sind diese Umgebungsinformationen (in dem ersten Schritt) bei von extern gesteuerter Bewegung des mobilen Geräts erhalten worden sind, und zwar insbesondere bei manueller Bewegung des mobilen Geräts, wie vorstehend in Bezug auf die Einlernfunktion erwähnt. Dabei kann das mobile Gerät also z.B. über ein Smartphone und eine Bluetooth-Verbindung gesteuert werden. Ein Benutzer kann dabei also z.B. den Rasenmähroboter zumindest in etwa oder so gut als möglich am Rand des gewünschten Arbeitsbereichs entlang steuern und dem Rasenmähroboter dabei folgen. Bei dieser Bewegung des mobilen Geräts für den ersten Schritt kann auch von einer ersten Bewegung gesprochen werden.

Basierend auf den Umgebungsinformationen aus dem ersten Schritt wird dann eine Umrandung des Arbeitsbereichs innerhalb der Umgebung für das mobile Gerät bestimmt. Dabei kann es sich um eine Art vorläufige oder grobe Umrandung handeln, die grundsätzlich aber für eine Arbeitsfunktion verwendet werden kann. Da diese Umrandung auf einem manuellen Steuern des mobilen Geräts basiert, kann es vorkommen, dass diese Umrandung nicht sehr genau ist.

Die Umgebungsinformationen aus dem ersten Schritt können dabei insbesondere mittels SLAM, insbesondere visuellem SLAM, gewonnen werden. Hierzu können z.B. die erfassten Bilder entsprechend verarbeitet werden. Bevorzugt wird die Umrandung basierend auf den Umgebungsinformationen aus dem ersten Schritt unter Verwendung von Loop-Closure bestimmt und/oder verfeinert.

Sog. Loop-Closures sind ein Aspekt im Zusammenhang mit SLAM. Hierbei wird zugrunde gelegt, dass das mobile Gerät, während es sich in der Umgebung bzw. im Arbeitsbereich bewegt, eine bestimmten Position in der Umgebung erreicht, an der es zuvor schon einmal war. Anhand von Umgebungsinformation wie Bildern oder z.B. auch Abstandsinformationen, von der jeweiligen Position des mobilen Geräts aus gesehen, und durch Vergleich solcher Umgebungsinformationen mit früheren Umgebungsinformationen kann bestimmt werden, ob bzw. dass das mobile Gerät ein einer Position vorher schon einmal war. Wenn dies festgestellt wird, müsste die im Rahmen des SLAM erstellte Karte bzw. der darin als zurückgelegt markierte Weg des mobilen Geräts ebenfalls angeben, dass sich das mobile Gerät wieder an derselben Position befindet. Aufgrund möglicher Abweichungen wird dies aber häufig nicht der Fall sein. Vielmehr würde in der erstellten Karte die aktuelle Position von der früheren Position abweichen. Hier kann nun die Karte und damit die Umrandung angepasst werden, sodass die beiden auseinanderfallenden Positionen wieder übereinstimmen. Hierbei wird von einem sog. Loop-Closure gesprochen.

Insofern ist es auch besonders zweckmäßig, wenn die von extern gesteuerte Bewegung des mobilen Geräts eine Bewegung von einem Startpunkt zu einem Endpunkt umfasst, wobei der Startpunkt und der Endpunkt zumindest innerhalb vorgegebener Toleranzen identisch sind. Beispielsweise können Startpunkt und der Endpunkt an der Dockingstation sein. Damit kann ein Loop-Closure erfolgen und es kann die Umrandung im ersten Schritt besonders gut bestimmt werden.

In einem zweiten Schritt werden dann Umgebungsinformationen, insbesondere Bilder, der Umgebung zumindest im Bereich der Umrandung bereitgestellt. Diese Umgebungsformationen sind dabei bei erneuter Bewegung des mobilen Geräts entlang der Umrandung und/oder innerhalb der Umrandung, erhalten worden. Bei dieser erneuten Bewegung handelt es sich insbesondere um eine automatisierte Bewegung, also z.B. im Rahmen der erwähnten Arbeitsfunktion, d.h. es kann dabei eine Bearbeitung durchgeführt werden. Dies kann z.B. das erste Mähen des (ggf. ganzen) Arbeitsbereichs umfassen. Bei dieser (erneuten) Bewegung des mobilen Geräts für den zweiten Schritt kann auch von einer weiteren Bewegung gesprochen werden.

Basierend auf den Umgebungsinformationen aus dem zweiten Schritt wird dann die (im ersten Schritt erhaltene) Umrandung bestätigt und/oder angepasst. Wenn die Umrandung bestätigt wird, kann die im ersten Schritt erhaltene Umrandung weiter verwendet werden, es kann von einer Verifizierung gesprochen werden. Wenn die Umrandung angepasst wird, kann z.B. die im ersten Schritt erhaltene Umrandung basierend auf im zweiten Schritt erhaltenen Umgebungsinformationen angepasst werden. So kann z.B. anhand der Umgebungsinformationen (vorzugsweise Bilder) aus dem zweiten Schritt die Info erhalten werden, dass an einer bestimmten Stelle außerhalb der Umrandung aus dem ersten Schritt noch ein Stück Rasen ist, sodass die Umrandung dort entsprechend angepasst werden kann. Es versteht sich, dass Teile der Umrandung bestätigt und andere Teile der Umrandung angepasst werden können.

Wie erwähnt, können die Umgebungsinformationen aus dem zweiten Schritt Bilder der Umgebung umfassen. Das Bestätigen und/oder Anpassen der Umrandung umfasst dann, in einer Ausführungsform, das Bestimmen einer Karte der Umgebung, die zumindest einen Teil der Umrandung umfasst, anhand der Bilder aus dem zweiten Schritt. Dies kann z.B. unter Verwendung einer Ortho-Projektion erfolgen.

Auf diese Weise müssen im ersten Schritt keine oder allenfalls wenige Bilder erfasst und gespeichert werden, um damit später die Karte zu erstellen. Vielmehr erfolgt das Bestimmen der Umrandung nur über (visuelles) SLAM. Dies spart Rechenressourcen. Die Umgebungsinformationen, insbesondere Bilder, aus dem zweiten Schritt können dann für die Verifizierung bzw. Anpassung verwendet werden. Da der zweite Schritt im Rahmen eines Arbeitsvorgangs erfolgen kann, kann somit insgesamt eine schnellere Verwendung des mobilen Geräts mit der eigentlichen Arbeitsfunktion erfolgen, als wenn z.B. ein zusätzlicher Schritt zur Verifizierung (vor der Arbeitsfunktion) gemacht würde.

Alternativ zu den zwei Schritten ist es aber auch möglich, dass die Umgebungsinformationen und Bilder der Umgebung, in der sich das mobile Gerät bewegt oder bewegen soll, bereitgestellt werden, die bei von extern gesteuerter Bewegung des mobilen Geräts erhalten werden oder worden sind. Basierend auf den Umgebungsinformationen und den Bildern wird dann eine Umrandung des Arbeitsbereichs innerhalb der Umgebung für das mobile Gerät bestimmt. In diesem Fall werden also zudem auch Bilder erfasst und ggf. gespeichert und verarbeitet. Dies erlaubt es, in nur einem Bewegungsvorgang des mobilen Geräts eine besonders genaue Umrandung zu bestimmen, wenngleich hier mehr Rechenressourcen nötig sein können. Im Vergleich zu dem vorstehend beschriebenen Vorgehen mit zwei Schritten ist hier nur der erste Schritt nötig, jedoch werden dort auch die Bilder erfasst.

In einer Ausführungsform können auch in diesem Fall zudem Umgebungsinformationen, insbesondere Bilder, der Umgebung zumindest im Bereich der Umrandung bereitgestellt werden, die bei einer weiteren (insbesondere automatiserten) Bewegung des mobilen Geräts, entlang der Umrandung und/oder innerhalb der Umrandung, erhalten werden oder worden sind. Bei der weiteren Bewegung führt das mobile Gerät insbesondere einen Bearbeitungsvorgang durch. Dies kann an sich dem zweiten Schritt der zuvor beschriebene Variante entsprechen. Mit diesen Umgebungsinformationen bzw. Bildern muss dann die Umrandung nicht bestätigt und/oder angepasst werden (wenngleich dies aber der Fall sein kann). Vielmehr kann hiermit die Karte der Umgebung bestimmt werden, die zumindest einen Teil der Umrandung umfasst; dies kann, wie vorstehend schon erwähnt, kann z.B. unter Verwendung einer Ortho-Projektion erfolgen.

Wie sich gezeigt hat, kann eine besonders genaue Umrandung auch durch gezielte Bewegung des mobilen Geräts erhalten werden, und zwar anhängig davon, ob z.B. die zwei Schritte oder nur ein Schritt für die Bestimmung der Umrandung verwendet werden.

Hierbei werden die Umgebungsinformationen und/oder Bilder der Umgebung, in der sich das mobile Gerät bewegt oder bewegen soll, bereitgestellt. Dabei sind die Umgebungsinformationen und/oder Bilder bei einer Bewegung des mobilen Geräts erhalten worden sind: Diese Bewegung kann von extern, manuell oder automatisiert sein.

Die Bewegung des mobilen Geräts umfasst dabei aber zumindest einen Bewegungsabschnitt, in dem sich das mobile Gerät zumindest teilweise außerhalb des Arbeitsbereichs auf einem Untergrund bewegt, der von einem Untergrund des Arbeitsbereichs (bzw. des gewünschten Arbeitsbereichs) verschiedenen ist. Dabei kann es sich z.B. um einen Weg oder Pflaster handeln, während der (gewünschte) Arbeitsbereich als Untergrund z.B. Rasen aufweist. Mit anderen Worten wird das mobile Gerät also gezielt außerhalb des (eigentlichen bzw. gewünschten) Arbeitsbereichs bewegt, während dies normalerweise nur innerhalb des (eigentlichen bzw. gewünschten) Arbeitsbereichs erfolgt.

Es wird dann, basierend auf den Umgebungsinformationen und/oder den Bildern, die Umrandung des Arbeitsbereichs innerhalb der Umgebung für das mobile Gerät bestimmt. Durch diese gezielte Bewegung des mobilen Geräts außerhalb des (eigentlichen bzw. gewünschten) Arbeitsbereichs ist es möglich, den Rand des (gewünschten) Arbeitsbereichs genauer zu erfassen, sodass auch die Umrandung (sei es z.B. die vorläufige oder finale Umrandung) deutlich genauer bestimmbar ist. Hierbei sei erwähnt, dass die Umrandung hier nicht direkt auf der Bewegung des mobilen Geräts, z.B. der von extern gesteuerten Bewegung, beruhen muss, sondern ggf. entsprechend angepasst werden kann, um die Umrandung auf den (gewünschten) Arbeitsbereich zu begrenzen.

Zweckmäßig ist es, wenn der Untergrund, der von dem Untergrund des Arbeitsbereichs verschiedenen ist, an den Untergrund des Arbeitsbereichs angrenzt und/oder innerhalb vorgegebener Toleranzen dieselbe Höhe aufweist. Die Höhe ist hierbei insbesondere auf eine Schwerkraftrichtung bezogen. Auf diese Weise kann das mobile Gerät problemlos von einem zum anderen Untergrund bewegt werden, sogar auf beiden Untergründen zugleich.

Es sei erwähnt, dass häufig nur ein Teil der Umrandung auf diese Weise bestimmbar ist, da z.B. auch Teile des Untergrunds außerhalb des (gewünschten) Arbeitsbereichs beispielsweise nicht befahrbar sein können; es kann z.B. stellenweise ein Zaun, eine Mauer oder Wasser den (gewünschten) Arbeitsbereichsbegrenzen.

Wie erwähnt, kann die Karte der Umgebung unter Verwendung einer Ortho-Projektion erfolgen bestimmt werden, und zwar eine visuelle Karte. Unter einer visuellen Karte soll dabei insbesondere eine Karte verstanden werden, die die Umgebung bildlich zeigt, keine SLAM-Karte mit Knoten und Kanten oder dergleichen. Es kann hierbei auch von einer Strukturkarte gesprochen werden, die also eine Struktur der Umgebung zeigt, z.B. mit Bereichen wo Rasen ist und wo nicht.

Hierzu werden Bilder der Umgebung bereitgestellt, wobei die Bilder Bewegung des mobilen Geräts, in der Umgebung, erhalten werden oder worden sind. Diese Bewegung kann von extern, manuell oder automatisiert sein. Es wird dann eine ortho-projizierte Ansicht der Bilder der Umgebung bestimmt. Basierend auf der ortho-projizierten Ansicht der Bilder der Umgebung wiederum wird dann die visuelle Karte der Umgebung, die dann bereitgestellt wird; diese kann dann wie vorstehend erläutert verwendet werden.

In einer Ausführungsform wird die visuelle Karte der Umgebung unter Verwendung eines Computer-Vision-Algorithmus, wie insbesondere einer Segmentierung, z.B. einer semantischen Segmentierung, bestimmt. Durch die Anwendung eines Computer-Vision-Algorithmus können Bilder vorverarbeitet werden. Insbesondere können dabei zusammenhängende Bereiche in einem Bild bestimmt werden, was insbesondere auch bei der Segmentierung der Fall ist. Dabei können die Bilder der Umgebung vor Bestimmen der ortho-projizierten Ansicht segmentiert oder allgemein mittels des Computer-Vision-Algorithmus verarbeitet werden, um segmentierte Bilder, oder allgemein vorverarbeitete Bilder, der Umgebung zu erhalten. Die ortho-projizierte Ansicht der Bilder der Umgebung werden dann basierend auf den segmentierten Bildern bzw. vorerarbeiteten Bildern der Umgebung bestimmt.

Ebenso kann aber die ortho-projizierte Ansicht der Bilder der Umgebung vor der Segmentierung bzw. Anwendung des Computer-Vision-Algorithmus bestimmt werden. Es wird dann die ortho-projizierte Ansicht der Bilder der Umgebung segmentiert bzw. vorverarbeitet.

In einer Ausführungsform wird die Segmentierung mittels eines Maschinenlern-Algorithmus, z.B. eines künstlichen neuronalen Netzes, durchgeführt. Ebenso kann aber eine klassische Anwendung eines Computer-Vision-Algorithmus erfolgen.

Da das mobile Gerät ein Rasenmähroboter ist, und die Bilder der Umgebung Bilder von Gras (bzw. Rasen) umfassen, können bei der Segmentierung bzw. Anwendung des Computer-Vision-Algorithmus Grenzen von Gras bestimmt werden.

Auf diese Weise können also besonders genau Grenzen des (gewünschten) Arbeitsbereichs, also z.B. des Rasens, bestimmt werden, sodass die visuelle Karte besonders genau den Arbeitsbereich darstellen kann. Insbesondere lasst sich damit aber die Umrandung besonders genau bestimmen, also z.B. über die Grenze zwischen Gras und anderem Untergrund. Dies erlaubt eine besonders genaue Bestimmung oder Anpassung der Umrandung, wie vorstehend erwähnt.

Unter einer Ortho-Projektion eines Bildes (oder vorverarbeiteten bzw. segmentierten Bildes) ist dabei insbesondere zu verstehen, dass das Bild auf einen Untergrund projiziert wird, also Top-Down. Hierbei ist zu bedenken, dass Kameras des mobilen Geräts wie z.B. des Rasenmähers in der Regel zumindest in etwa horizontal ausgerichtet sind. Damit ist in einem Bild, das mit einer solchen Kamera erfasst bzw. aufgenommen wird, der Untergrund nur am unteren Rand und verzerrt dargestellt. Unter Berücksichtigung von Kameraparameter wie z.B. der konkreten Anordnung der Kamera am mobilen Gerät und des Sichtfelds und dergleichen lässt sich der teil des Bildes, der einen Untergrund zeigt, entzerren und im Sinne einer Draufsicht darstellen. In dieser Darstellung, der Ortho-Projektion, können die konkreten und genauen Grenzen des Arbeitsbereichs deutlich besser erkannt werden.

Bei einer Segmentierung, insbesondere der sog. semantische Segmentierung, kann jedem Bildpunkt (Pixel) in einem Bild eine Klasse von mehreren Klassen zugeordnet werden, d.h. die Bildpunkte werden beschriftet oder klassifiziert. Hierzu werden zunächst typischerweise Merkmale der Bildpunkte bestimmt oder extrahiert, basierend worauf dann die Klasse zugeordnet wird. Solche Merkmale können z.B. Form, Farbe, Kontext, Muster, Lichtvarianz und/oder Bildkontext sein. So könnte z.B. einem Bildpunkt die Farbe Grün zugeordnet werden und die umgebenden Bildpunkte könnten ebenfalls alle Grün sein. Dies würde auf Rasen hindeuten.

Als Klassen kommen dabei verschiedene Merkmale in Betracht. Beim Beispiel des Rasenmähroboters können z.B. in einem einfachen Fall zwei Klassen verwendet werden, nämlich "Rasen" und "nicht Rasen", d.h. es wird für jeden Bildpunkt des Bildes bestimmt, ob dieser Rasen zeigt oder nicht. Es versteht sich, dass auch mehr als zwei Klassen verwendet werden können, um z.B. auch Wege, Straßen, Gebäude, Fahrzeuge oder Menschen zu erkennen und ggf. einem Bildpunkt zu zuordnen. Denkbar ist auch - in Anlehnung an die Klasse "nicht Rasen" - eine Klasse "Hintergrund", der alles zugeordnet wird, was nicht einer anderen Klasse zugeordnet wird. Durch all diese Beschriftungen werden im Vergleich zur reinen Objekterkennung, bei der (nur) Objekte in einem Bild erkannt werden, mehr Informationen hinzugefügt.

Grundsätzlich muss die Klassifizierung nicht für jeden einzelnen Bildpunkt erfolgen, sondern sie kann auch für Segmente oder Teile des Bildes erfolgen, die jeweils mehrere Bildpunkte umfassen. Solche Segmente können fest vorgegeben sein oder aber auch im Rahmen der semantischen Segmentierung erst gebildet werden, ggf. auch mit verschiedenen Größen innerhalb des Bildes. Hierzu werden bevorzugt eines oder mehrere künstliche neuronale Netze oder allgemein auf künstlicher Intelligenz basierende Mustererkennungsverfahren eingesetzt.

Ein segmentiertes Bild erlaubt damit eine einfachere und schnellere Bestimmung, wo eine Grenze zwischen verschiedenen Untergründen ist.

In einer Ausführungsform wird weiterhin eine geänderte, insbesondere erweiterten, Umrandung, bestimmt, und zwar basierend auf der Umrandung aus dem ersten Schritt und/oder den Umgebungsinformationen, insbesondere Bildern, aus dem zweiten Schritt. Das Bestimmen der geänderten Umrandung erfolgt dabei insbesondere automatisiert. Die geänderte Umrandung wird dann, insbesondere als Karte, insbesondere für einen Benutzer, bereitgestellt. So kann z.B. ein Vorschlag für eine geänderte Umrandung bereitgestellt werden. Hierzu kann die geänderte Umrandung z.B. auf einem Smartphone oder anderem Eingabegerät angezeigt werden.

In einer Ausführungsform ist vorgesehen, dass eine geänderte, insbesondere erweiterten, Umrandung, basierend auf der Umrandung aus dem ersten Schritt und/oder den Umgebungsinformationen, insbesondere Bildern, aus dem zweiten Schritt bestimmt wird. Das Bestimmen der geänderten Umrandung erfolgt dabei insbesondere automatisiert. Dabei wird die geänderte Umrandung als die angepasste Umrandung bestimmt. Hier kann also automatisiert eine Verbesserung der Umrandung erfolgen, und zwar insbesondere ohne Änderung durch eine Benutzer.

Das Bestimmen der geänderten Umrandung kann insbesondere auch unabhängig davon erfolgen, wie genau die vorhandene Umrandung erhalten worden ist. Es kann hierzu eine vorhandene Umrandung des Arbeitsbereichs innerhalb der Umgebung, in der sich das mobile Gerät bewegt oder bewegen soll bereitgestellt werden. Die vorhandene Umrandung ist dabei zumindest basierend auf Umgebungsinformationen der Umgebung, die bei einer ersten Bewegung des mobilen Geräts erhalten worden sind, bestimmt worden ist.

Es werden dann Umgebungsinformationen, insbesondere Bilder, der Umgebung zumindest im Bereich der vorhandenen Umrandung bereitgestellt. Diese sind dann bei erneuter, insbesondere automatisierter, Bewegung des mobilen Geräts, entlang der vorhandenen Umrandung und/oder innerhalb der vorhandenen Umrandung, erhalten worden sind. Es wird dann automatisiert die geänderten Umrandung bestimmt, und zwar basierend auf der vorhandenen Umrandung und den Umgebungsinformationen, insbesondere Bildern, die während der erneuten Bewegung des mobilen Geräts erhalten worden sind. Diese geänderte Umrandung, wird, insbesondere als Karte (z.B 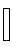 die erwähnte visuelle Karte) bereitgestellt, insbesondere für einen Benutzer. Dies kann z.B. auf einem Smartphone oder anderen Eingabe- oder Anzeigegerät erfolgen. Ein Benutzer kann also einen Vorschlag für eine verbesserte Umrandung erhalten.

Bei der geänderten Umrandung kann es sich insbesondere um eine erweiterte Umrandung oder eine verbesserte Umrandung handeln. Damit ist es möglich, besonders einfach und schnell (da automatisiert) eine bessere Umrandung zu erhalten, die eine genauere Abdeckung des gewünschten Arbeitsbereichs erlaubt.

Es kann auch bestimmt werden, ob eine Abweichung zwischen der geänderten Umrandung und der vorhandenen Umrandung einem vorgegebenen Kriterium genügt; z.B. kann ein mittlerer Abstand oder kumulierter Abstand der beiden Umrandungen bestimmt werden und mit einem Schwellwert verglichen werden. Die geänderte Umrandung wird nur dann bereitgestellt, wenn die Abweichung dem vorgegebenen Kriterium genügt. Dem Benutzer wird also z.B. nur dann ein Vorschlag unterbreitet, wenn dies als sinnvoll erscheint.

Weiterhin kann vorgesehen sein, dass Korrekturinformationen von extern erhalten werden. Hierzu kann der Benutzer, basierend auf dem Vorschlag, z.B. Änderungen am Vorschlag vornehmen und übermitteln. Es wird dann die angepasste Umrandung basierend auf der Umrandung (je nachdem, welche vorhanden ist, es können auch eine vorhandene und eine vorgeschlagene geänderte Umrandung sein) und basierend auf den Korrekturinformationen bestimmt.

In einer Ausführungsform ist vorgesehen, dass die Umgebungsinformationen aus dem ersten Schritt Informationen, insbesondere Bilder, zu Referenzpunkten in der Umgebung umfassen. Die Informationen zu den Referenzpunkten können dann insbesondere bei der Bestimmung der Umrandung und/oder beim Bestimmen einer visuellen Karte verwendet werden. Bei solchen Referenzpunkten kann es sich z.B. Checkpoints handeln, insbesondere auch nur einige, nicht entlang der gesamten Strecke, aber z.B. in bestimmten Abständen und/oder bei bestimmten Manövern (90°-Kurve etc.). Dies ermöglicht eine genauere Verifizierung oder Anpassung der Umrandung oder auch der Karte, während im ersten Schritt nur wenige Bilder gespeichert werden müssen.

Neben den vorstehend erwähnten Möglichkeiten, eine Umrandung zu bestimmen, die einen Arbeitsbereich zumindest teilweise begrenzt (dies betrifft insbesondere äußere Umrandungen), kann ausgehend von einer vorhandenen Umrandung (die dann z.B. wie vorstehend bestimmt worden ist) auch eine zusätzliche Umrandung bestimmt werden, insbesondere eine innere Umrandung, d.h. eine Umrandung die z.B. von einer vorhandenen Umrandung eingeschlossen wird. Eine solche zusätzliche Umrandung kann z.B. einen im Rasen vorhandenen Baum oder andere Hindernisse von dem zu bearbeitenden Arbeitsbereich ausnehmen.

Hierzu werden Umgebungsinformationen (z.B. Position, Orientierung) und/oder Bilder einer Umgebung bereitgestellt, in der sich das mobile Gerät bewegt oder bewegen soll. Diese Umgebungsinformationen bzw. Bilder sind bei einer Bewegung des mobilen Geräts erhalten worden. Die Bewegung des mobilen Geräts umfasst hierbei eine Bewegung von einem Startpunkt aus, wobei der Startpunkt einem Punkt in der Umgebung entspricht, an dem das mobile Gerät bei Bewegung an oder entlang einer vorhandenen Umrandung (dies kann eine Umrandung sein, wie vorstehend erwähnt, sei es bereits angepasst oder geändert oder nicht) gestoppt wird oder worden ist. Die Bewegung des mobilen Geräts erfolgt hierbei insbesondere automatisiert. Das Stoppen des mobilen Geräts erfolgt hierbei aktiv und/oder manuell, also bewusst.

Es wird dann, basierend auf den Umgebungsinformationen und/oder den Bildern, ggf. auch basierend auf der vorhandenen Umrandung, die zusätzlichen Umrandung des Arbeitsbereichs innerhalb der Umgebung für das mobile Gerät bestimmt. Mit anderen Worten wird das mobile Gerät während seiner (automatisierten) Bewegung entlang einer bereits vorhandenen Umrandung oder zumindest (kurzzeitig) an einer solchen vorhandenen Umrandung gestoppt und von dort aus z.B. um ein Hindernis herum gesteuert. Dabei wird das mobile Gerät zumindest teilweise von extern (z.B. manuell) gesteuert, z.B. wie vorstehend für den ersten Schritt beschrieben. Auf diese Weise ist für diese zusätzliche Umrandung bekannt, wie diese relativ zur vorhandenen Umrandung liegt.

Vorzugsweise umfasst die Bewegung des mobilen Geräts weiterhin eine Bewegung bis zu einem Endpunkt, wobei der Startpunkt und der Endpunkt zumindest innerhalb vorgegebener Toleranzen identisch sind. Damit kann die zusätzliche Umrandung z.B. mittels Loop-Clousure optimiert werden.

Bevorzugt umfasst die Bewegung vom Startpunkt bis zu einem Zwischenpunkt eine von extern gesteuerte (z.B. manuelle) Bewegung des mobilen Geräts, die Bewegung vom Zwischenpunkt bis zum Endpunkt dann hingegen z.B. eine automatisierte Bewegung des mobilen Geräts. Insbesondere entspricht der Zwischenpunkt, zumindest innerhalb vorgegebener Toleranzen, einem Punkt, den das mobile Gerät während der Bewegung vom Starpunkt zum Zwischenpunkt bereits passiert hat. Auf diese Weise ist sichergestellt, dass das mobile Gerät das Hindernis komplett umfahren hat.

Im Übrigen gilt für die zusätzliche Umrandung dann das bereits zu den anderen Umrandungen ausgeführte, d.h. diese kann z.B. mittels SLAM bestimmt werden.

Basierend auf der Umrandung (ggf. auch zusätzlichen und/oder geänderten oder angepassten Umrandung) und/oder der (ggf. visuellen) Karte der Umgebung können dann Navigationsinformationen für das mobile Gerät bestimmt werden. Basierend auf den Navigationsinformationen wiederum können Steuerungsinformationen zum Bewegen des mobilen Geräts bestimmt werden. Die Steuerungsinformationen können dann bereitgestellt werden und/oder das mobilen Gerät kann basierend auf den Steuerungsinformationen bewegt werden.

Eine erfindungsgemäße Recheneinheit (d.h. allgemein ein System zur Datenverarbeitung), z.B. ein Steuergerät oder eine Steuereinheit eines mobilen Geräts, oder ein zentraler Server oder anderes Rechensystem, ist, insbesondere programmtechnisch, dazu eingerichtet, ein erfindungsgemäßes Verfahren durchzuführen.

Die Erfindung betrifft auch ein mobiles Gerät, das eingerichtet ist, Steuerungsinformationen zu erhalten, die wie verstehend erwähnt bestimmt worden sind. Zudem oder alternativ weist das mobile Gerät eine erfindungsgemäße Recheneinheit auf. Weiterhin weist das mobile Gerät eine Steuer- oder Regeleinheit und eine Antriebseinheit zum Bewegen des mobilen Geräts auf. Zudem kann das mobile Gerät Erfassungsmittel zum Erfassen von Umgebungsinformationen einer Umgebung, in der sich das mobile Gerät bewegt oder bewegen soll, aufweisen, z.B. die erwähnte Kamera oder auch mehrere Kameras.

Vorzugsweise ist das mobile Gerät als sich zumindest teilweise automatisiert bewegendes Fahrzeug, insbesondere als Personenbeförderungsfahrzeug oder als Güterbeförderungsfahrzeug, und/oder als Roboter, insbesondere als Haushaltsroboter, z.B. Reinigungsroboter, Boden- oder Straßenreinigungsgerät oder Rasenmähroboter, und/oder als Drohne ausgebildet.

Auch die Implementierung eines erfindungsgemäßen Verfahrens in Form eines Computerprogramms oder Computerprogrammprodukts mit Programmcode zur Durchführung aller Verfahrensschritte ist vorteilhaft, da dies besonders geringe Kosten verursacht, insbesondere wenn ein ausführendes Steuergerät noch für weitere Aufgaben genutzt wird und daher ohnehin vorhanden ist. Schließlich ist ein maschinenlesbares Speichermedium vorgesehen mit einem darauf gespeicherten Computerprogramm wie oben beschrieben. Geeignete Speichermedien bzw. Datenträger zur Bereitstellung des Computerprogramms sind insbesondere magnetische, optische und elektrische Speicher, wie z.B. Festplatten, Flash-Speicher, EEPROMs, DVDs u.a.m. Auch ein Download eines Programms über Computernetze (Internet, Intranet usw.) ist möglich. Ein solcher Download kann dabei drahtgebunden bzw. kabelgebunden oder drahtlos (z.B. über ein WLAN-Netz, eine 3G-, 4G-, 5G- oder 6G-Verbindung, etc.) erfolgen.

Weitere Vorteile und Ausgestaltungen der Erfindung ergeben sich aus der Beschreibung und der beiliegenden Zeichnung.

Die Erfindung ist anhand eines Ausführungsbeispiels in der Zeichnung schematisch dargestellt und wird im Folgenden unter Bezugnahme auf die Zeichnung beschrieben.

Kurze Beschreibung der Zeichnungen
- Figur 1a: zeigt schematisch ein mobiles Gerät zur Erläuterung der Erfindung.
- Figur 1b: zeigt schematisch das mobiles Gerät aus Figur 1a in einer anderen Ansicht.
- Figuren 2a, 2b, 2c: zeigen schematisch eine Umgebung mit mobilem Gerät zur Erläuterung der Erfindung.
- Figuren 3a, 3b, 3c, 3d: zeigen schematisch Bilder zur Erläuterung von Ausführungsformen der Erfindung.
- Figur 4a, 4b: zeigen schematisch Karten auf einem Eingabegerät.
- Figur 5: zeigt schematisch einen Ablauf eines Verfahrens zur Erläuterung von Ausführungsformen der Erfindung.

### Ausführungsform(en) der Erfindung

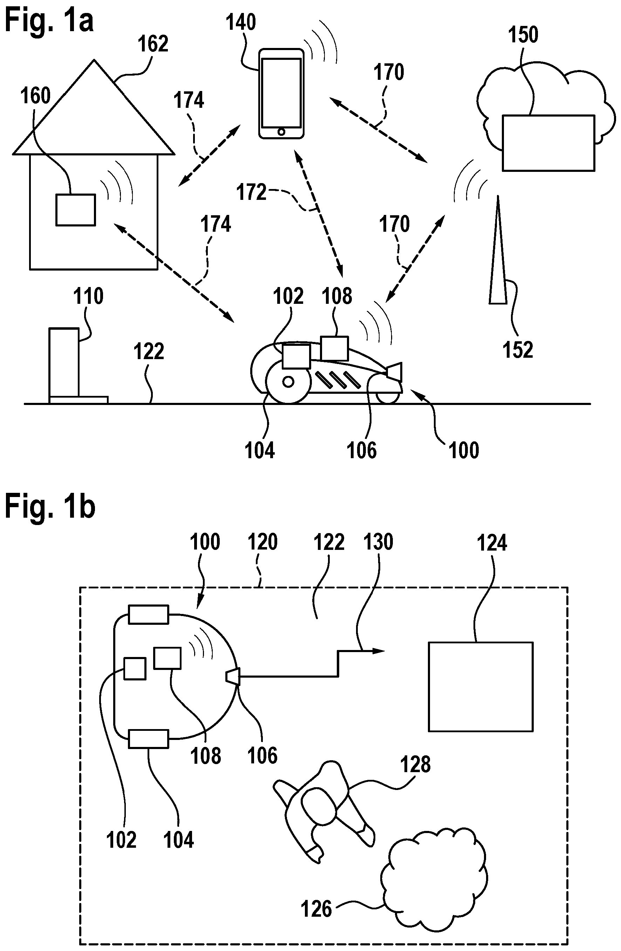

In Figur 1a ist schematisch und beispielhaft ein mobiles Gerät 100, insbesondere Arbeitsgerät, zur Erläuterung der Erfindung dargestellt. In Figur 1b ist das mobile Gerät 100 in einer anderen Ansicht und mit anderen Aspekten dargestellt. Nachfolgend sollen die Figuren 1a und 1b übergreifend beschrieben werden.

Bei dem mobilen Arbeitsgerät 100 handelt es sich beispielhaft um einen Rasenmähroboter mit einer Steuer- oder Regeleinheit 102 und einer Antriebseinheit 104 (mit Rädern) zum Navigieren bzw. Bewegen des Rasenmähroboters 100 in einer Umgebung 120 und dort insbesondere in oder auf einem Arbeitsbereich 122, z.B. einem Rasen oder Garten. Der Rasenmähroboter 100 kann sich z.B. entlang eines Bewegungspfads oder einer Trajektorie 130 bewegen oder bewegt werden. Weiterhin weist der Rasenmähroboter 100 beispielhaft einen als Kamera ausgebildeten Sensor 106 auf. Mittels der Kamera 106 können Bilder der Umgebung erfasst werden, die wieder für die Navigation verwendet werden können. Zudem ist beispielhaft eine Dockingstation 110 vorgesehen, an der der Rasenmähroboter z.B. aufgeladen werden kann.

In Figur 1b sind in der Umgebung weiterhin beispielhaft ein Gebäude 124, ein Baum 126 sowie eine Person 128 angedeutet, die als Objekte oder Hindernisse bei der Navigation des Rasenmähroboters zu berücksichtigen sein können.

Weiterhin weist der Rasenmähroboter 100 eine Recheneinheit 108, z.B. ein Steuergerät, auf, mittels dessen Daten empfangen und/oder gesendet werden können. Wie bereits erwähnt, kann dies über z.B. drahtlose Kommunikationsverbindungen verschiedener Art erfolgen. Diese Arten von drahtlosen Kommunikationsverbindungen sind in Figur 1a mit 170, 172, 174 bezeichnet. Beispielhaft handelt es sich hierbei um eine Mobilfunkverbindung 170, eine Bluetooth-Verbindung 172 und eine WLAN-Verbindung bzw. WiFi-Verbindung 174. Die Recheneinheit 108 kann hierzu z.B. entsprechende Funkmodule aufwiesen oder mit solchen verbunden sein, die dann Teil des Rasenmähroboters 100 sind.

Weiterhin sind, in Figur 1a, ein mobiles Eingabegerät 140, z.B. ein Smartphone, ein zentrales Rechensystem 150 (oder ein Server, der für die sog. Cloud stehen kann) sowie ein WLAN-Router 160 in einem Gebäude 162 (es kann ein anderes Gebäude sein als das Gebäude 124 oder aber auch dasselbe). Zwischen dem Rasenmähroboter 100 bzw. dessen Recheneinheit 108, dem mobilen Eingabeberät 140, dem Rechensystem 150 und dem WLAN-Router 160 sind die schon erwähnten Arten von drahtlosen Kommunikationsverbindungen 170, 172, 174 vorgesehen. Anzumerken ist, dass die Mobilfunkverbindung 170 über einen Mobilfunksender 152 hergestellt wird, der wiederum an das Rechensystem 150 angebunden ist.

Zwischen dem Rasenmähroboter 100 bzw. dessen Recheneinheit 108 und dem mobilen Eingabeberät 140 ist die Bluetooth-Verbindung 172 vorgesehen, d.h. zwischen dem Rasenmähroboter 100 bzw. dessen Recheneinheit 108 und dem mobilen Eingabeberät 140 kann eine Bluetooth-Verbindung aufgebaut werden. Es versteht sich, dass das mobile Eingabegerät 140 hierzu ein geeignetes Funkmodul aufweist.

Zwischen dem Rasenmähroboter 100 bzw. dessen Recheneinheit 108 und dem WLAN-Router ist die WLAN-Verbindung 174 vorgesehen, d.h. zwischen dem Rasenmähroboter 100 bzw. dessen Recheneinheit 108 und dem WLAN-Router 160 kann eine WLAN-Verbindung aufgebaut werden. Es versteht sich, dass der WLAN-Router 160 hierzu ein geeignetes Funkmodul aufweist. Der WLAN-Router 160 kann wiederum über eine z.B. drahtgebundene Verbindung an das Internet angeschlossen sein.

Zwischen dem Rasenmähroboter 100 bzw. dessen Recheneinheit 108 und dem Rechensystem 150 ist die Mobilfunk-Verbindung 170 vorgesehen, d.h. zwischen dem Rasenmähroboter 100 bzw. dessen Recheneinheit 108 und dem Rechensystem 150 kann eine Mobilfunk-Verbindung aufgebaut werden. An dieser Stelle sei erwähnt, dass die solche Mobilfunkverbindung 170 vom Rasenmähroboter 100 bzw. dessen Recheneinheit 108 oder dort einem Funkmodul z.B. mit dem Mobilfunksender 152 oder einer entsprechenden Mobilfunkstation hergestellt wird, an die das Rechensystem 150 wiederum angebunden ist, z.B. auch über Mobilfunk und/oder drahtgebunden.

Außerdem ist auch zwischen dem mobilen Eingabegerät 140 und dem Rechensystem 150 die Mobilfunk-Verbindung 170 vorgesehen, d.h. zwischen dem mobilen Eingabegerät 140 und dem Rechensystem 150 kann eine Mobilfunk-Verbindung aufgebaut werden. Auch hier gilt, dass eine solche Mobilfunkverbindung 170 vom mobilen Eingabegerät 140 oder dort einem Funkmodul z.B. mit einem Mobilfunksender oder einer entsprechenden Mobilfunkstation hergestellt wird, an die das Rechensystem 150 wiederum angebunden ist. Es sei erwähnt, dass das mobile Eingabegerät 140 hierfür ein Funkmodul für WLAN umfasst, was bei einem typischen Smartphone in der Regel der Fall ist.

Ebenso kann zwischen dem mobilen Eingabegerät 140 und dem Rechensystem 150 die WLAN-Verbindung 174 vorgesehen sein, d.h. zwischen dem mobilen Eingabegerät 140 und dem Rechensystem 150 kann eine WLAN-Verbindung aufgebaut werden. Hierzu kann zwischen dem mobilen Eingabegerät 140 und dem WLAN-Router die WLAN-Verbindung 174 vorgesehen sein. Der WLAN-Router 160 kann wiederum, wie schon erwähnt, über eine z.B. drahtgebundene Verbindung an das Internet angeschlossen sein und darüber an das Rechensystem 150.

Der Rasenmähroboter 100 bzw. dessen Recheneinheit 108 kann damit also über jeder der erwähnten drahtlosen Kommunikationsverbindungen 170, 172, 174 Daten senden und empfangen, also Daten austauschen. Mit dem mobilen Eingabegerät 140 können dabei nicht nur über die Bluetooth-Verbindung Daten austauschen, sondern auch über die Mobilfunkverbindung 170 oder die WLAN-Verbindung 174, also indirekt über das Rechensystem 150. Es sei erwähnt, dass grundsätzlich auch eine WLAN-Verbindung zwischen dem Rasenmähroboter 100 bzw. dessen Recheneinheit 108 und dem mobilen Eingabegerät 140 hergestellt werden kann.

Das mobile Arbeitsgerät bzw. der Rasenmähroboter 100 kann dazu eingerichtet sein, ein oder mehreren Funktionen durchzuführen. Diese Funktionen umfassen in einer Ausführungsform eine Arbeitsfunktion, z.B. eine Mähfunktion, und eine Einlernfunktion.

Die Arbeitsfunktion umfasst z.B. ein automatisiertes Bewegen des Rasenmähroboter 100 in der Umgebung 120 und das Durchführen eines Arbeitsvorgangs (oder Bearbeiungsvorgangs) in der Umgebung, also z.B. das Mähen des Rasens, zumindest zeitweise während des Bewegens in der Umgebung (je Situation kann es auch sein, dass der Rasenmähroboter zunächst ohne Mähen zu einer bestimmten Stelle fährt, um dort mit dem Mähen zu beginnen oder es fortzusetzen).

Dieser Arbeitsfunktion kann die Mobilfunkverbindung 170 zugeordnet sein. Dies bedeutet, dass der Rasenmähroboter 100 bzw. dessen Recheneinheit 108 für das Durchführen der Arbeitsfunktion nötige Daten zumindest teilweise über die Mobilfunkverbindung erhält und/oder sendet. Dies kann z.B. einen Startbefehl für einen Start eines Mähvorgangs umfassen, der vom mobilen Eingabegerät (ggf. über das Rechensystem 150) an den Rasenmähroboter 100 gesendet wird.

Dies kann auch das Erhalten von z.B. Trajektorien (oder allgemein Navigationsinformationen) von dem Rechensystem 150 umfassen, welche Trajektorien (bzw. Navigationsinformationen) im Rechensystem 150 bestimmt werden, und denen der Rasenmähroboter für den Mähvorgang dann folgen soll. Ebenso kann aber vorgesehen sein, dass eine Trajektorie (oder allgemein Navigationsinformationen) im Rasenmähroboter 100 bzw. dessen Recheneinheit 108 selbst bestimmt werden oder anderweitig dort erhalt werden. Anstelle einer Trajektorie kann die Recheneinheit 108 aber z.B. auch (nur) Steuerungsinformationen erhalten, die anhand einer Trajektorie bestimmt worden sind (die wiederum im Rechensystem 150 bestimmt worden sein kann), und gemäß welcher die Steuer- oder Regeleinheit 102 über die Antriebseinheit 104 den Rasenmähroboter 100 bewegen kann, um einer Trajektorie, z.B. der hier nur beispielhaft angedeuteten Trajektorie 130, zu folgen.

Der Rasenmähroboter 100 kann sich dann z.B. selbständig über den Arbeitsbereich 122 bzw. in der Umgebung 120 bewegen bzw. dort navigieren und dabei den Rasen mähen. Wie bereits erwähnt, können dabei verschiedene Objekte von dem Rasenmähroboter 100 bzw. dessen Kamera 106 erfasst werden (sie sind also in Bildern, die mittels der Kamera aufgenommen werden, sichtbar) und dann bei der Navigation, d.h. beim Bestimmen von Navigationsinformationen, berücksichtigt werden. Hierzu können die dabei erfassten Bilder bzw. entsprechende Daten z.B. über die Mobilfunkverbindung 170 an das Rechensystem 150 übermittelt werden.

Die Einlernfunktion umfasst z.B. ein manuell gesteuertes Bewegen des Rasenmähroboters in der Umgebung, insbesondere entlang einer Umrandung des Arbeitsbereichs 122, um dem Rasenmähroboter die Umrandung beizubringen. Die Arbeitsfunktion, also das Mähen, muss (oder auch soll) hierbei nicht verwendet werden. Hierzu können dem Rasenmähroboter 100 z.B. (kontinuierlich) Steuerbefehle (oder Ansteuerbefehle) zum Navigieren bzw. Bewegen übermittelt werden. Solche Steuerbefehle bzw. entsprechenden Daten werden dabei vom mobilen Eingabegerät 140 über die Bluetooth-Verbindung 172 an den Rasenmähroboter gesendet. Ebenso kann der Rasenmähroboter 100 bzw. dessen Recheneinheit 108 über die Bluetooth-Verbindung Daten zurück an das mobile Eingabegerät 140 senden. Hierbei wird auch von einem Einlernen oder sog. "Teach-In" gesprochen.

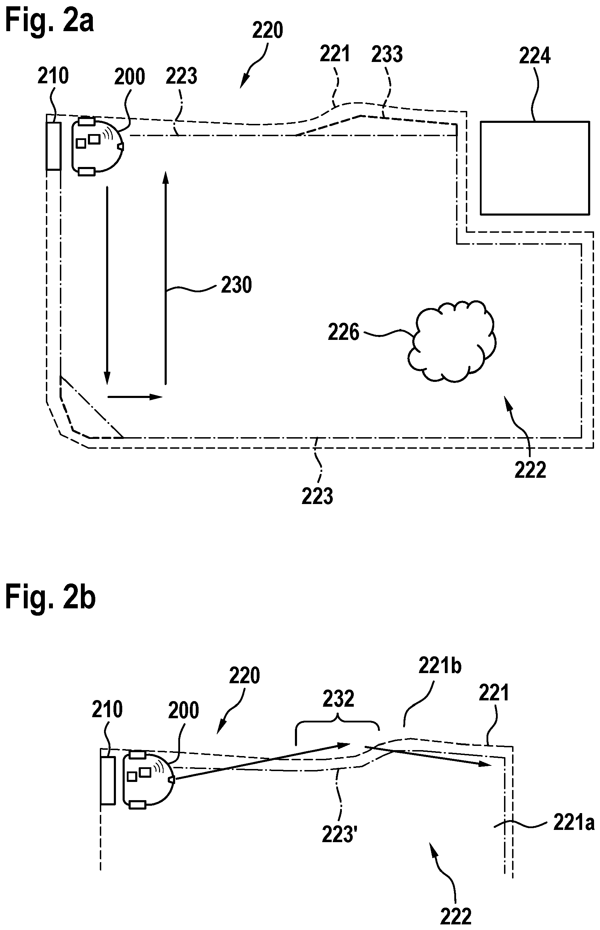

In Figur 2a ist zur Erläuterung der Erfindung eine Umgebung 220 mit einem Gebäude 224 und einem Baum 226 gezeigt, vergleichbar der Umgebung gemäß Figuren 1a, 1b. Zudem ist mit 221 beispielhaft ein gewünschter Arbeitsbereich, z.B. ein zu mähender Rasen, gezeigt. Auch sind erneut beispielhaft ein mobiles Gerät bzw. Rasenmähroboter 200 sowie ein Dockingstation 210 gezeigt.

Gewünscht ist dann typischerweise, dass der gewünschte Arbeitsbereich 221 vollständig und auch möglichst genau vom mobilen Gerät bei der Bearbeitung abgedeckt wird, sodass also möglichst der gesamte Rasen gemäht wird.

Hierzu ist nun eine Umrandung für einen (tatsächlichen) Arbeitsbereich zu bestimmen, der dann von dem mobilen Gerät bearbeitet werden kann. Mit anderen Worten ist eine Umrandung oder Begrenzung zu bestimmen, innerhalb welche sich das mobile Gerät bewegen soll und innerhalb der eine Bearbeitung erfolgen soll.

Es kann nun, im Rahmen der erwähnten Einlernfunktion, das mobile Gerät 200 z.B. mittels des Smartphones von einem Benutzer von der Dockingstation 210 entlang des Randes des gewünschten Arbeitsbereichs 221 gesteuert werden, bis das mobile Gerät 200 wieder die Dockingstation 210 erreicht.

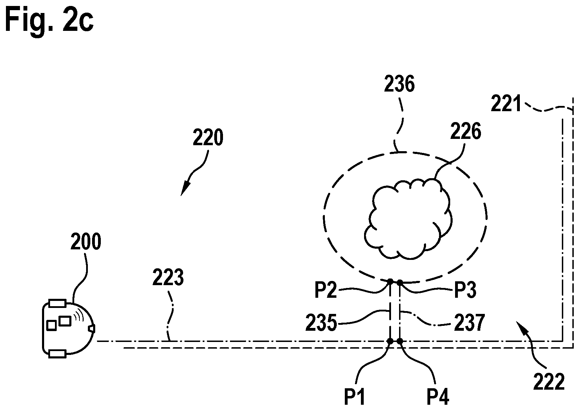

Basierend auf dieser Bewegung und dabei erhaltenen Umgebungsinformationen, z.B. Bildern, lässt sich in einem ersten Schritt eine Umrandung 223 eines (tatsächlichen) Arbeitsbereichs 222 bestimmen, wie in Figur 2 gezeigt. Hierbei ist zu sehen, dass diese Umrandung 223 von dem tatsächlichen Rand des gewünschten Arbeitsbereichs 221 abweicht.

Dies kann insbesondere Teil daran liegen, dass der Benutzer das mobile Gerät 200 zu weit entfernt vom tatsächlichen Rand des gewünschten Arbeitsbereichs 221 bewegt. Dies ist beispielhaft links unten und rechts oben in Figur 2 angedeutet, wo die Umrandung 223 besonders weit vom tatsächlichen Rand des gewünschten Arbeitsbereichs 221 entfernt ist.

An dieser Stelle sei erwähnt, dass die bei der Bewegung des mobilen Geräts 200 eine Position des mobilen Geräts ggf. in Bezug auf einen Mittelpunkt bestimmt wird, wobei für die Umrandung hingegen die geometrischen Abmessungen des mobilen Geräts oder auch dessen Bearbeitungswerkzeugs zu berücksichtigen sind.

Es können nun aber, in einem zweiten Schritt, erneut Umgebungsinformationen, insbesondere Bilder, der Umgebung erhalten werden, und zwar bei erneuter des mobilen Geräts 200, entlang der Umrandung 223 und/oder innerhalb der Umrandung 223. Dies kann z.B. im Rahmen der erwähnten Arbeitsfunktion der Fall sein, bei der sich das mobile Gerät gemäß einer Trajektorie 330 bewegt.

Basierend auf dabei erhaltenen Umgebungsinformationen bzw. Bilder kann die Umrandung 223 dann bestätigt und/oder angepasst werden. Dies ist beispielhaft links unten und rechts oben in Figur 2a angedeutet, wo die Umrandung 223, wie erwähnt, besonders weit vom tatsächlichen Rand des gewünschten Arbeitsbereichs 221 entfernt ist. Eine angepasste Umrandung ist dort mit 233 bezeichnet.

Wenn sich da mobile Gerät 200 z.B. entlang der Trajektorie 230 bewegt, werden auch Bilder von der Stelle links unten erfasst. Durch Analyse dieser Bilder kann erkannt werden, dass der tatsächlichen Rand des gewünschten Arbeitsbereichs 221 von der Umrandung 223 abweicht.

Basierend auf diesen Bildern kann auch eine Karte der Umgebung, die zumindest einen Teil der Umrandung umfasst, bestimmt werden.

Wie bereits erwähnt, kann anstelle der zwei Schritte auch nur der Schritt verwendet werden, bei dem das mobile Gerät von extern gesteuert wird, wobei dann aber auch Bilder der Umgebung erfasst werden.

In Figur 2b ist ein Teil der Umgebung 220 aus Figur 2a erneut gezeigt. Hier ist nun mit 231 ein Weg oder Bewegungspfad gezeigt, entlang dessen das mobile Gerät 200 z.B. bei der von extern gesteuerten, manuellen Bewegung bewegt wird. Dabei ist zu sehen, dass das mobile Gerät einen Bewegungsabschnitt oder Bewegungspfadabschnitt 232 umfasst, in dem sich das mobile Gerät zumindest teilweise außerhalb des (gewünschte) Arbeitsbereichs 221 bewegt, und zwar auf einem Untergrund 221b, der von einem Untergrund 221a des Arbeitsbereichs 221 verschiedenen ist. Beispielsweise kann der Untergrund 221a Rasen sein, der Untergrund 221b hingegen ein Weg oder Pflaster.

Durch diese Bewegung kann die Umrandung, hier mit 223' bezeichnet, genauer bestimmt werden also ohne diese Bewegung außerhalb des Arbeitsbereichs 221. An dieser Stelle sei erwähnt, dass die Umrandung 223' hier etwas beabstandet von dem Rand des (gewünschten) Arbeitsbereichs 221 gezeigt ist, wenngleich dies in der Praxis deutlich besser übereinstimmen kann.

In Figur 2c ist ein Teil der Umgebung 220 aus Figur 2a erneut gezeigt. Hier soll nun das Bestimmen einer zusätzlichen Umrandung erläutert werden. Dabei kann von der Umrandung 223, wie sie z.B. wie vorstehend erläutert bestimmt worden ist, als vorhandene Umrandung ausgegangen werden.

Während sich das mobile Gerät 200 an der Umrandung 223 entlang bewegt, und zwar insbesondere automatisiert, kann es gestoppt werden, und zwar z.B. an einem Punkt P1. Von dort, d.h. dem Punkt P1 als Startpunkt, kann das mobile Gerät 200 dann manuell z.B. über die erwähnte Bluetooth-Verbindung mit dem Smartphone um den Baum 226, ein Hindernis, gesteuert werden; dies ist mit dem Weg 235 und 236 gezeigt. Zweckmäßigerweise erfolgt diese manuelle Bewegung bis zu einem Punkt P3, einem Zwischenpunkt, der zumindest innerhalb vorgegebener Toleranzen auf einem Punkt (hier Punkt P2) liegt, der zuvor bereits befahren wurde (d.h. auf dem Weg 235, 236 liegt). Von dort kann das mobile Gerät dann z.B. wieder automatisiert bis zu einem Endpunkt, hier Punkt P4 fahren, der zumindest innerhalb vorgegebener Toleranzen mit dem Startpunkt übereinstimmt. Dies ist mit dem Weg 237 gezeigt.

Auf diese Weise kann die zusätzliche Umrandung bestimmt werden, und zwar insbesondere als derjenige Teil des Weges, der zwischen den Punkten P2 und P3 liegt; hierbei handelt es sich um eine zumindest näherungsweise geschlossene Schleife; in Figur 2c entspricht diese zusätzliche Umrandung dem Weg 236.

Während es sich bei der Umrandung 223 bzw. 233 also insbesondere um eine äußere Umrandung handelt, kann bei der Umrandung 236 von einer inneren Umrandung gesprochen werden.

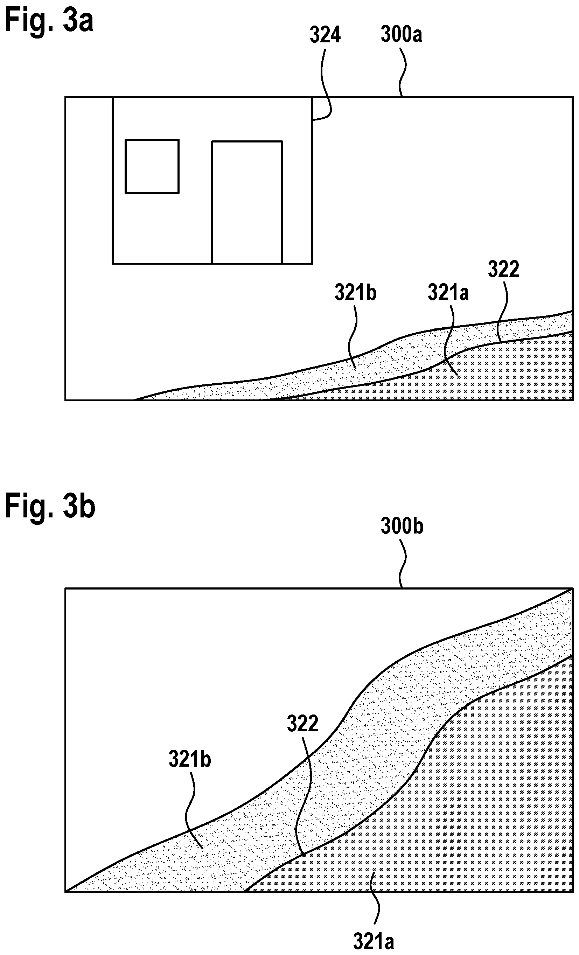

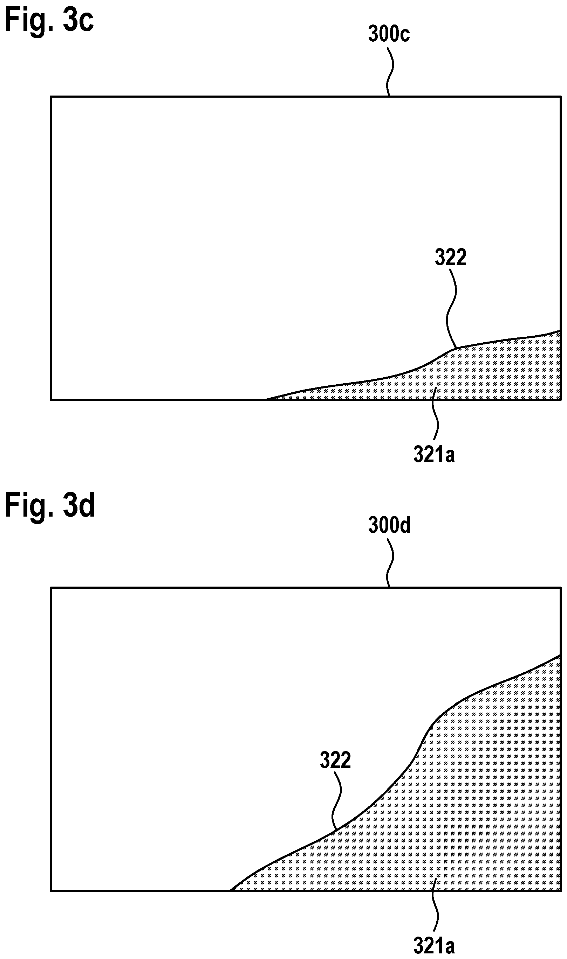

In Figuren 3a, 3b, 3c, 3d sind schematisch Bilder zur Erläuterung der erwähnten Ortho-Projektion und Segmentierung als Beispiel einer Anwendung eines Computer-Vision-Algorithmus gezeigt, wie sie in Ausführungsformen der Erfindung verwendet werden können.

In Figur 3a ist ein Bild 300a gezeigt, das von einem mobilen Gerät bzw. dessen Kamera erfasst werden kann. Beispielhaft kann das Bild 300a in etwa in der Situation wie sie in Figur 2a oder 2b gezeigt ist, erfasst werden. Dabei ist insbesondere ein Gebäude 324 in Frontansicht zu sehen, sowie am unteren Rand ein Stück des gewünschten Arbeitsbereichs 322, mit z.B. Rasen als Untergrund 321a. Neben dem Arbeitsbereich 322 verläuft ein Weg mit anderem Untergrund 321b.

Wie anhand des Bildes 300a zu erkennen, kann es schwierig sein, basierend darauf direkt eine Umrandung zu bestimmen, die möglichst genau dem gewünschten Arbeitsbereichs 322 bzw. dessen Rand entsprechen soll.

In Figur 3b ist nunmehr ein Bild 300b gezeigt, bei dem es sich um eine Ortho-Projektion des Bildes 300a handelt. Hier ist zu sehen, dass das Stück des gewünschten Arbeitsbereichs 322, mit Rasen als Untergrund 321a, sowie der Weg mit anderem Untergrund 321b in einer Draufsicht (oder Top-Down-View) gezeigt sind. Dort entsprechen die geometrischen Verhältnisse und Abmessungen bzw. Verläufe des Rands des gewünschten Arbeitsbereichs 322 (d.h. die hier mit 322 bezeichnete Linie) zumindest in etwa den tatsächlichen Verhältnissen.

In Figur 3c ist ein Bild 300c gezeigt, bei dem es sich um eine semantische Segmentierung des Bildes 300a handelt. Dabei wird nur nach zwei Klassen unterschieden, nämlich z.B. Rasen 321a und Hintergrund oder Rest, was hier nicht bezeichnet ist. Dort fällt dann z.B. das Gebäude, der Weg und alles andere außer Rasen darunter. Hier ist zu sehen, dass

In Figur 3d ist ein Bild 300d gezeigt, dass dem Bild 300a mit semantischer Segmentierung und Ortho-Projektion entspricht. Dies kann z.B. aus dem Bild 300b durch eine semantische Segmentierung oder aus dem Bild 300c durch eine Ortho-Projektion erhalten werden. Das Ergebnis wird zumindest annähernd identisch sein. Es versteht sich, dass verschiede geringe Unterschiede auftreten können.

In jedem Fall erlaubt eine Ortho-Projektion des Bildes, insbesondere mit (semantischer) Segmentierung, eine besonders genaue Bestimmung des Randes des (gewünschten) Arbeitsbereichs, womit die Umrandung besonders genau bestimmt werden kann. Ebenso kann damit eine genaue (visuelle) Karte der Umgebung bestimmt werden, in der z.B. zumindest ein Teil der Umrandung gezeigt ist. Diese kann dann z.B. einem Benutzer auf einem Smartphone angezeigt werden.

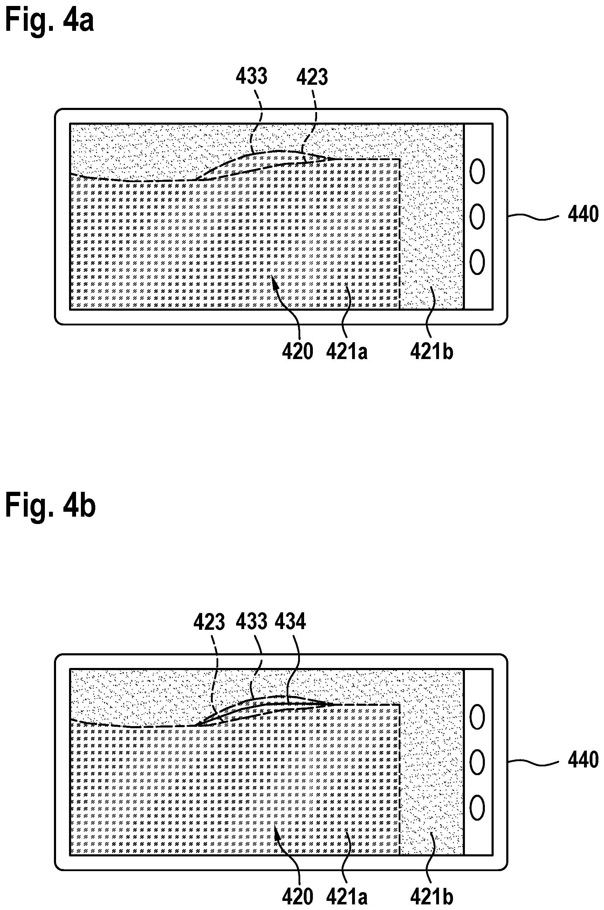

In Figur 4a ist beispielhaft ein Eingabegerät 440 gezeigt, z.B. ein Smartphone. Dabei kann es sich z.B. um das Eingabegerät 140 gemäß Figur 1a oder ein vergleichbares Eingabegerät handeln Neben der Steuerung des mobilen Geräts im Einlernen kann darauf z.B. auch eine visuelle Karte 420 angezeigt werden, wie beispielhaft in Figur 4a gezeigt. Dort sind dann z.B. ein Bereich 421a für Gras bzw. Rasen und ein Bereich 421b außerhalb zu sehen. Zudem ist in der Karte eine Line 423 gezeigt, die z.B. einer Umrandung entsprechen kann, die im vorstehend genannte ersten Schritt erstellt worden ist; dies kann z.B. der Umrandung 223 gemäß Figur 2a entsprechen.

Zudem ist eine Linie 433 gezeigt, die eine geänderte, insbesondere erweitere und/oder verbesserte Umrandung darstellen kann; dies kann z.B. der Umrandung 233 gemäß Figur 2a entsprechen. Eine solche geänderte bzw. erweitere Umrandung kann, wie erwähnt, insbesondere automatisiert bestimmt und dann als Vorschlag dem Benutzer in der Karte, wie hier in Figur 4a dargestellt, angezeigt werden.

Der Benutzer könnte dann z.B. über einen geeigneten Eingabebefehl am Eingabegerät 440 bestätigen, dass er mit dem Vorschlag der Umrandung 433 einverstanden ist. Ebenso könnte der Benutzer den Vorschlag mit der Umrandung 433 ablehnen. Dann kann z.B. die Umrandung 423 beibehalten werden.

Ebenso kann der Benutzer z.B. eine Änderung vorschlagen. Dies ist beispielhaft in Figur 4b gezeigt, und zwar mit einer Linie 434 für eine geänderte Umrandung. Der Benutzer kann hierzu z.B. mittles eines Touch-Displays des Eingabegeräts 440 die Line 433 verschieben (z.B. an geeigneten Punkten der Linie), sodass dies in Linie 424 resultiert.

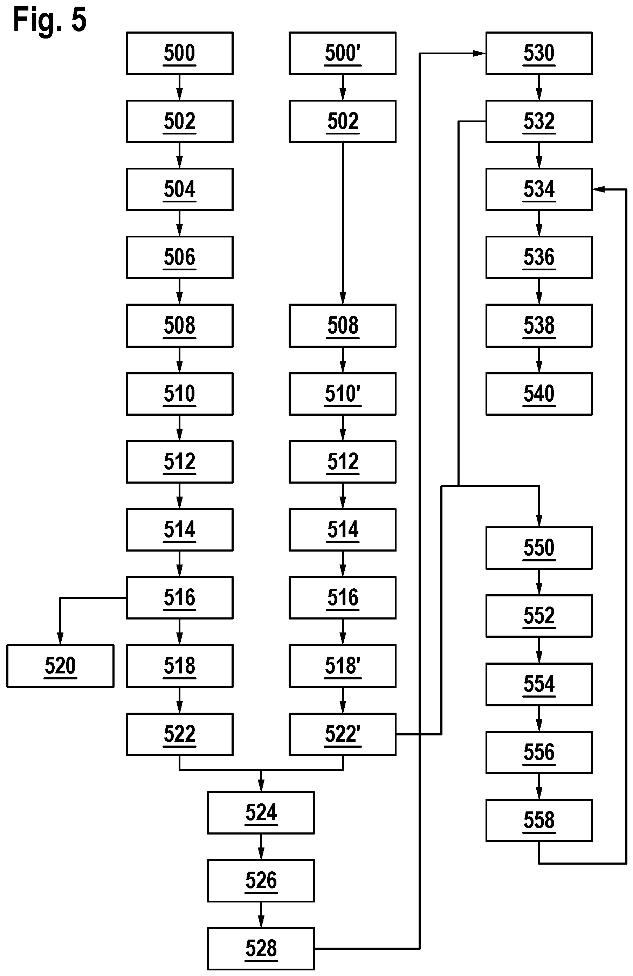

In Figur 5 ist schematisch ein Ablauf eines Verfahrens zum Bestimmen einer Umrandung gezeigt, die einen Arbeitsbereich für ein mobiles Gerät, also z.B. des Rasenmähroboters 100 gemäß Figuren 1a, 1b oder 2a, 2b, 2c, zumindest teilweise begrenzt. Nachfolgend soll dieser Ablauf auch unter Verweis auf die vorstehend erläuterten Figuren näher erläutert werden.

Hierzu werden, in Schritt 500, einem ersten Schritt, Umgebungsinformationen 502 einer Umgebung, in der sich das mobile Gerät bewegt oder bewegen soll bereitgestellt. Diese Umgebungsinformationen können z.B. Positionen, Orientierung umfassen und z.B. basierend auf mittels der Kamera des mobilen Geräts erfassten Bildern bestimmt worden sein. Dies kann z.B. mittels SLAM, insbesondere visuellem SLAM, erfolgen. Dabei ist das mobile Gerät von extern gesteuert worden, wie vorstehend z.B. mit Bezug auf Figur 2a erläutert. Dabei kann das mobile Gerät insbesondere auch außerhalb des gewünschten Arbeitsbereichs auf einem anderen Untergrund bewegt worden sein, wie z.B. mit Bezug auf Figur 2b erläutert.

In Schritt 504 wird dann, basierend auf den Umgebungsinformationen 502 aus dem ersten Schritt, eine Umrandung des Arbeitsbereichs innerhalb der Umgebung, für das mobile Gerät, bestimmt, wie dies z.B. mit Bezug auf Figur 2a erläutert wurde. Dies kann z.B. unter Verwendung von Loop-Closure erfolgen, insbesondere wenn Start- und Endpunkt bei der von extern gesteuerten Bewegung gleich sind oder nahe beieinander liegen, z.B. an der Dockingstation. Damit wird auch eine Umrandung bereitgestellt.

In Schritt 506, einem zweiten Schritt, werden dann Umgebungsinformationen 508, z.B. Bilder, der Umgebung zumindest im Bereich der Umrandung bereitgestellt. Diese Umgebungsinformationen bzw. Bilder 508 sind bei erneuter Bewegung des mobilen Geräts, entlang der Umrandung und/oder innerhalb der Umrandung, erhalten worden, wie vorstehend z.B. mit Bezug auf Figur 2a erläutert.

In einem Schritt 510 kann, basierend auf den bzw. anhand der Bilder 508, eine Karte, insbesondere eine visuelle Karte, der Umgebung bestimmt werden. Dies kann unter Verwendung der Ortho-Projektion und Segmentierung erfolgen. Ein Beispiel für solche Bilder ist das in Figur 3a gezeigte Bild 300a. Ein Beispiel für eine solche Karte ist die in Figur 4a gezeigte Karte 420.

Hierbei kann, in Schritt 512, aus den Bildern 508 eine ortho-projizierte Ansicht 514 der Bilder der Umgebung bestimmt werden, wie z.B. mit Bild 300b in Figur 3 gezeigt. In Schritt 516 können diese ortho-projizierten Bilder 514 bzw. deren Ansichten dann segmentiert werden, wie dies z.B. mit Bild 300d in Figur 3d gezeigt ist. Damit kann die Karte erstellt und auch bereitgestellt werden.

Basierend auf der Karte oder auch nur den segmentierten, ortho-projizierten Bilder kann dann entweder, Schritt 518, die vorhandene Umrandung (aus dem ersten Schritt) bestätigt (oder verifiziert) werden. Es kann aber ggf. die vorhandene Umrandung, Schritt 520, angepasst werden. Es kann dann, Schritt 522, die dabei erhaltene (also z.B. die bestätigte oder angepasste) Umrandung bereitgestellt werden, z.B. zur weiteren Verwendung.

Alternativ kann aber auch vorgesehen sein, dass, Schritt 500', die Umgebungsinformationen 502 und Bilder 508 bereitgestellt werden, die bei der von extern gesteuerten Bewegung erhalten worden sind. In einem Schritt 510' kann, basierend auf den bzw. anhand der Bilder 508, eine Karte, insbesondere eine visuelle Karte bestimmt werden, wie auch vorstehend beschrieben. Insbesondere können dabei die Schritte 512 bis 516 ebenfalls vorgesehen sein.

Es kann dann, Schritt 518', basierend auf den Umgebungsinformationen und den Bildern, die Umrandung bestimmt werden. Es kann dann, Schritt 522', diese Umrandung bereitgestellt werden, z.B. zur weiteren Verwendung.

Ausgehend von der Umrandung, die in Schritt 522 oder 522' bereitgestellt wurde - oder auch ausgehend von der Umrandung, die in Schritt 504 bestimmt bzw. bereitgestellt wurde, kann, Schritt 524, eine geänderte, insbesondere erweiterte Umrandung bestimmt werden, und zwar entweder basierend auf der Umrandung aus dem ersten Schritt und/oder den Umgebungsinformationen, insbesondere Bildern, aus dem zweiten Schritt, oder allgemein aus einer vorhandenen Umrandung, wie z.B. mit Bezug auf Figur 2a erläutert. Ebenso können dann Umgebungsinformationen, insbesondere Bilder, von einer weiteren Bewegung (z.B. während eines Bearbeitungsvorgangs) bereitgestellt werden.

Das Bestimmen der geänderten Umrandung erfolgt dabei insbesondere automatisiert. Die geänderten Umrandung wird dann, insbesondere als Karte, insbesondere für einen Benutzer, bereitgestellt, Schritt 526, wie z.B. mit Bezug auf Figur 4a erläutert.

Der Benutzer kann dann z.B. eine Änderung bzw. Korrektur vornehmen, wie mit Bezug auf Fig. 4b erläutert. Es werden dann, Schritt 528, Korrekturinformationen 530 von extern (also z.B. vom Smartphone) empfangen. Dann kann, Schritt 532, die in Schritt 518 bestätigte bzw. in Schritt 518' erhaltene Umrandung angepasst werden. Ebenso kann aber die angepasste Karte gemäß Schritt 520 erneut angepasst werden.

Ebenso kann auf diese Weise die angepasste Karte gemäß Schritt 520 erhalten werden, d.h. die angepasste Karte wird überhaupt erst mit Korrektur des Benutzers erhalten. Die angepasste Umrandung wird dann also basierend auf der Umrandung und basierend auf den Korrekturinformationen bestimmt. Alternativ kann die geänderte Umrandung aber auch ohne die Korrekturinformationen bestimmt werden.

Basierend auf der Umrandung (z.B. der zuerst erhaltenen, der angepasst oder geänderten Umrandung) können dann, Schritt 534, Navigationsinformationen 536 für das mobile Gerät bestimmt werden. Basierend darauf können dann, Schritt 538 Steuerungsinformationen 540 zum Bewegen des mobilen Geräts bestimmt werden, die dann bereitgestellt werden können.

Nach Erhalt der Umrandung, sei es eine initiale Umrandung (vgl. Schritt 522 oder 522'), eine angepasste oder geänderte Umrandung (Vgl. Schritt 532), kann ausgehend von dieser als eine vorhandene Umrandung auch eine zusätzliche, z.B. innere Umrandung, bestimmt werden.

Hierzu werden, Schritt 550, Umgebungsinformationen 552 (vergleichbar den Umgebungsinformationen 502, z.B. Position, Orientierung) und/oder von Bilder 554 (vergleichbar den Bildern 508) einer Umgebung bereitgestellt, in welcher Umgebung, sich das mobile Gerät bewegt oder bewegen soll. Diese Umgebungsinformationen bzw. Bilder sind bei einer Bewegung des mobilen Geräts erhalten worden, wobei die Bewegung des mobilen Geräts eine Bewegung von einem Startpunkt aus umfasst, wobei der Startpunkt einem Punkt in der Umgebung entspricht, an dem das mobile Gerät bei (insbesondere automatisierter) Bewegung an einer vorhandenen Umrandung gestoppt wird oder worden ist. Dies ist mit Bezug auf Figur 2c näher erläutert.

Es wird dann, Schritt 556, basierend auf den Umgebungsinformationen und/oder den Bildern, eine zusätzliche Umrandung des Arbeitsbereichs innerhalb der Umgebung für das mobile Gerät bestimmt, wie z.B. ebenfalls mit Bezug auf Figur 2c näher erläutert. Diese zusätzliche Umrandung kann dann, Schritt 558, bereitgestellt werden und z.B. ab Schritt 534 wieder zum Bewegen des mobilen Geräts verwendet werden. Auch kann bei der zusätzlichen Umrandung eine geänderte Umrandung bestimmt werden, wie dies vorstehend in Bezug auf die Umrandung 223 mit der geänderten Umrandung 233 beschrieben worden ist.

## Patentansprüche

1. Verfahren zum Bestimmen einer visuellen Karte (420) zumindest eines Teils einer Umgebung (120, 220), in der sich ein mobiles Gerät (100), das ein Rasenmähroboter ist, bewegt oder bewegen soll, umfassend:
Bereitstellen (506) von Bildern (508, 300a) der Umgebung, die bei einer Bewegung des mobilen Geräts (100), in der Umgebung, durch ein Erfassungsmittel des mobilen Geräts erhalten werden oder worden sind, wobei die Bilder der Umgebung Bilder von Gras umfassen,
Bestimmen (512) einer ortho-projizierten Ansicht (514, 300b, 300d) der Bilder der Umgebung als eine Draufsicht,
Bestimmen der visuellen Karte (420) der Umgebung basierend auf der ortho-projizierten Ansicht (514, 300b, 300d) der Bilder der Umgebung, wobei die visuelle Karte (420) der Umgebung weiterhin unter Verwendung eines Computer-Vision-Algorithmus bestimmt wird, wobei bei der Anwendung des Computer-Vision-Algorithmus Grenzen von Gras bestimmt werden, und
Bereitstellen der visuellen Karte der Umgebung.

2. Verfahren nach Anspruch 1, wobei die visuelle Karte (420) der Umgebung unter Verwendung einer Segmentierung als Computer-Vision-Algorithmus bestimmt wird.

3. Verfahren nach Anspruch 1 oder 2, wobei die Bilder (300a) der Umgebung vor Bestimmen der ortho-projizierten Ansicht mittels des Computer-Vision-Algorithmus verarbeitet werden, um vorverarbeitete Bilder (300c) der Umgebung zu erhalten, und
wobei die ortho-projizierte Ansicht (300d) der Bilder der Umgebung basierend auf den vorverarbeiteten Bildern (300c) der Umgebung bestimmt wird.

4. Verfahren nach Anspruch 1 oder 2, wobei die ortho-projizierte Ansicht (300b) der Bilder der Umgebung vor der Verarbeitung mittels des Computer-Vision-Algorithmus bestimmt wird, und
wobei die ortho-projizierte Ansicht (300b) der Bilder der Umgebung mittels des Computer-Vision-Algorithmus verarbeitet wird.

5. Verfahren nach einem der vorstehenden Ansprüche, wobei die Anwendung des mittels des Computer-Vision-Algorithmus, insbesondere die Segmentierung, mittels eines Maschinenlern-Algorithmus durchgeführt wird.

6. Verfahren nach einem der vorstehenden Ansprüche, wobei die visuelle Karte (420) zumindest einen Teil einer Umrandung umfasst, die einen Arbeitsbereich des mobilen Geräts innerhalb der Umgebung zumindest teilweise begrenzt.

7. Verfahren nach Anspruch 6, weiterhin umfassend:
Bestimmen (524) einer geänderten, insbesondere erweiterten, Umrandung (233), basierend auf der Umrandung und/oder den Bildern der Umgebung, wobei das Bestimmen der geänderten Umrandung insbesondere automatisiert erfolgt, und
Bereitstellen (526) der geänderten Umrandung, insbesondere als Karte, insbesondere für einen Benutzer.

8. Verfahren nach einem der vorstehenden Ansprüche, weiterhin umfassend:
Bestimmen (534), basierend auf der Umrandung und/oder der Karte der Umgebung, von Navigationsinformationen (536) für das mobile Gerät,
Bestimmen (538), basierend auf den Navigationsinformationen, von Steuerungsinformationen (540) zum Bewegen des mobilen Geräts, und
Bereitstellen der Steuerungsinformationen und/oder Bewegen des mobilen Geräts basierend auf den Steuerungsinformationen.

9. Recheneinheit (108) umfassend Mittel zur Ausführung des Verfahrens nach einem der vorstehenden Ansprüche.

10. Mobiles Gerät (100), das eingerichtet ist, Steuerungsinformationen, die mittels eines Verfahrens nach Anspruch 8 bestimmt worden sind, zu erhalten, und/oder mit einer Recheneinheit nach Anspruch 9, und
mit einem Antriebssystem (104) und einer Steuer- oder Regeleinheit (102) zum Ansteuern des Antriebssystems, und mit einem Erfassungsmittel (106) zum Erfassen von Umgebungsinformationen einer Umgebung, in der sich das mobile Gerät bewegt oder bewegen soll,
wobei das mobile Gerät insbesondere als sich zumindest teilweise automatisiert bewegendes Fahrzeug, insbesondere als Personenbeförderungsfahrzeug oder als Güterbeförderungsfahrzeug, und/oder als Roboter, insbesondere als Haushaltsroboter, z.B. Reinigungsroboter, Boden- oder Straßenreinigungsgerät oder Rasenmähroboter, und/oder als Drohne ausgebildet ist.

11. Computerprogramm umfassend Befehle, die bei der Ausführung des Programms durch einen Computer diesen veranlassen, das Verfahren nach Anspruch 1 bis 8 auszuführen.

12. Computerlesbares Speichermedium, auf dem das Computerprogramm nach Anspruch 11 gespeichert ist.

## Claims

1. Method for determining a visual map (420) of at least one part of an environment (120, 220) in which a mobile device (100), which is a robotic lawnmower, is moving or is intended to move, comprising:
providing (506) images (508, 300a) of the environment that are or have been obtained during a movement of the mobile device (100), in the environment, by a capturing means of the mobile device, wherein the images of the environment comprise images of grass,
determining (512) an ortho-projected view (514, 300b, 300d) of the images of the environment as a plan view,
determining the visual map (420) of the environment on the basis of the ortho-projected view (514, 300b, 300d) of the images of the environment, wherein the visual map (420) of the environment is furthermore determined using a computer vision algorithm, wherein borders of grass are determined during the application of the computer vision algorithm, and
providing the visual map of the environment.

2. Method according to Claim 1, wherein the visual map (420) of the environment is determined using segmentation as a computer vision algorithm.

3. Method according to Claim 1 or 2, wherein before determining the ortho-projected view, the images (300a) of the environment are processed by means of the computer vision algorithm in order to obtain preprocessed images (300c) of the environment, and
wherein the ortho-projected view (300d) of the images of the environment is determined on the basis of the preprocessed images (300c) of the environment.

4. Method according to Claim 1 or 2, wherein the ortho-projected view (300b) of the images of the environment is determined before processing by means of the computer vision algorithm, and
wherein the ortho-projected view (300b) of the images of the environment is processed by means of the computer vision algorithm.

5. Method according to any of the preceding claims, wherein the application is carried out by means of the computer vision algorithm, in particular the segmentation is carried out by means of a machine learning algorithm.

6. Method according to any of the preceding claims, wherein the visual map (420) comprises at least one part of a boundary which at least partially delimits a working region of the mobile device within the environment.

7. Method according to Claim 6, furthermore comprising:
determining (524) a changed, in particular extended, boundary (233), on the basis of the boundary and/or the images of the environment, wherein determining the changed boundary is carried out in particular in an automated manner, and
providing (526) the changed boundary, in particular as a map, in particular for a user.

8. Method according to any of the preceding claims, furthermore comprising:
determining (534), on the basis of the boundary and/or the map of the environment, navigation information (536) for the mobile device,
determining (538), on the basis of the navigation information, control information (540) for moving the mobile device, and
providing the control information and/or moving the mobile device on the basis of the control information.

9. Computing unit (108) comprising means for executing the method according to any of the preceding claims.

10. Mobile device (100) configured to obtain control information which has been determined by means of a method according to Claim 8, and/or having a computing unit according to Claim 9, and
having a drive system (104) and an open-loop or closed-loop control unit (102) for actuating the drive system, and having a capturing means (106) for capturing environment information pertaining to an environment in which the mobile device is moving or is intended to move,
wherein the mobile device is designed in particular as a vehicle moving in an at least partially automated manner, in particular as a passenger transport vehicle or as a goods transport vehicle, and/or as a robot, in particular as a domestic robot, e.g. a cleaning robot, floor or road cleaning device or robotic lawnmower, and/or as a drone.

11. Computer program comprising instructions which, when the program is executed by a computer, cause the latter to execute the method according to Claims 1 to 8.

12. Computer-readable storage medium on which the computer program according to Claim 11 is stored.

## Revendications

1. Procédé de détermination d'une carte visuelle (420) d'au moins une partie d'un environnement (120, 220) dans lequel un appareil mobile (100), qui est un robot tondeuse, se déplace ou doit se déplacer, comprenant :
la fourniture (506) d'images (508, 300a) de l'environnement qui sont ou ont été obtenues lors d'un déplacement de l'appareil mobile (100) dans l'environnement par un moyen de détection de l'appareil mobile, les images de l'environnement comprenant des images de gazon,
la détermination (512) d'une vue en projection orthogonale (514, 300b, 300d) des images de l'environnement sous la forme d'une vue de dessus,
la détermination de la carte visuelle (420) de l'environnement sur la base de la vue en projection orthogonale (514, 300b, 300d) des images de l'environnement, la carte visuelle (420) de l'environnement étant en outre déterminée en utilisant un algorithme de vision par ordinateur, des limites de gazon étant déterminées lors de l'application de l'algorithme de vision par ordinateur, et
la fourniture de la carte visuelle de l'environnement.

2. Procédé selon la revendication 1, dans lequel la carte visuelle (420) de l'environnement est déterminée en utilisant une segmentation en tant qu'algorithme de vision par ordinateur.

3. Procédé selon la revendication 1 ou 2, dans lequel les images (300a) de l'environnement sont traitées au moyen de l'algorithme de vision par ordinateur avant la détermination de la vue en projection orthogonale afin d'obtenir des images prétraitées (300c) de l'environnement, et
dans lequel la vue en projection orthogonale (300d) des images de l'environnement est déterminée sur la base des images prétraitées (300c) de l'environnement.

4. Procédé selon la revendication 1 ou 2, dans lequel la vue en projection orthogonale (300b) des images de l'environnement est déterminée avant le traitement au moyen de l'algorithme de vision par ordinateur, et
dans lequel la vue en projection orthogonale (300b) des images de l'environnement est traitée au moyen de l'algorithme de vision par ordinateur.

5. Procédé selon l'une des revendications précédentes, dans lequel l'application est effectuée au moyen de l'algorithme de vision par ordinateur, en particulier la segmentation est effectuée au moyen d'un algorithme d'apprentissage automatique.

6. Procédé selon l'une des revendications précédentes, dans lequel la carte visuelle (420) comprend au moins une partie d'un périmètre qui délimite au moins partiellement une zone de travail de l'appareil mobile à l'intérieur de l'environnement.

7. Procédé selon la revendication 6, comprenant par ailleurs :
la détermination (524) d'un périmètre modifié, en particulier étendu (233), sur la base du périmètre et/ou des images de l'environnement, la détermination du périmètre modifié étant effectuée en particulier de manière automatisée, et
la fourniture (526) du périmètre modifié, en particulier sous la forme d'une carte, en particulier pour un utilisateur.

8. Procédé selon l'une des revendications précédentes, comprenant par ailleurs :
la détermination (534), sur la base du périmètre et/ou de la carte de l'environnement, d'informations de navigation (536) pour l'appareil mobile,
la détermination (538), sur la base des informations de navigation, d'informations de commande (540) pour le déplacement de l'appareil mobile, et
la fourniture des informations de commande et/ou le déplacement de l'appareil mobile sur la base des informations de commande.

9. Unité de calcul (108) comprenant des moyens pour la mise en œuvre du procédé selon l'une des revendications précédentes.

10. Appareil mobile (100) conçu pour obtenir des informations de commande ayant été déterminées au moyen d'un procédé selon la revendication 8 et/ou comportant une unité de calcul selon la revendication 9, et
comportant un système d'entraînement (104) et une unité de commande ou de régulation (102) pour la commande du système d'entraînement, et comportant un moyen de détection (106) pour la détection d'informations d'environnement d'un environnement dans lequel l'appareil mobile se déplace ou doit se déplacer,
l'appareil mobile étant en particulier conçu sous la forme d'un véhicule se déplaçant de manière au moins partiellement automatisée, en particulier sous la forme d'un véhicule de transport de personnes ou d'un véhicule de transport de marchandises, et/ou sous la forme d'un robot, en particulier d'un robot domestique, par exemple un robot de nettoyage, un appareil de nettoyage de sols ou de rues ou un robot tondeuse, et/ou sous la forme d'un drone.

11. Programme informatique comprenant des instructions qui, lors de l'exécution du programme par un ordinateur, amènent celui-ci à mettre en œuvre le procédé selon les revendications 1 à 8.

12. Support de stockage lisible par ordinateur, sur lequel est stocké le programme informatique selon la revendication 11.
